Europäisches Patentamt

European Patent Office

Office européen des brevets

(11) Veröffentlichungsnummer: **0 312 679 B1**

## EUROPÄISCHE PATENTSCHRIFT

(45) Veröffentlichungstag der Patentschrift: **22.04.92**

(51) Int. Cl.⁵: **A01C 17/00**

(21) Anmeldenummer: **88102996.1**

(22) Anmeldetag: **29.02.88**

(54) Schleuderdüngerstreuer zum Verteilen von Düngemitteln und dgl.

(30) Priorität: **23.10.87 DE 3735896**

(43) Veröffentlichungstag der Anmeldung:
**26.04.89 Patentblatt 89/17**

(45) Bekanntmachung des Hinweises auf die
Patenterteilung:
**22.04.92 Patentblatt 92/17**

(84) Benannte Vertragsstaaten:
**BE DE FR GB NL**

(56) Entgegenhaltungen:
**EP-A- 0 158 335**
**FR-A- 2 450 551**

(73) Patentinhaber: **Amazonen-Werke H. Dreyer**
**GmbH & Co. KG**
**Am Amazonenwerk 9-13**
**W-4507 Hasbergen-Gaste(DE)**

(72) Erfinder: **Dreyer, Heinz, Dipl.-Ing. Univ. Dr.**
**agr.**
**Am Amazonenwerk 7**
**W-4507 Hasbergen(DE)**

## Beschreibung

Die Erfindung betrifft einen Schleuderdüngerstreuer zum Verteilen von Düngemitteln und dgl. gemäß des Oberbegriffes des Anspruches 1.

Durch die deutsche Offenlegungsschrift 29 08 949 ist ein Schleuderdüngerstreuer gemäß des Oberbegriffes des Patentanspruches 1 bekannt.

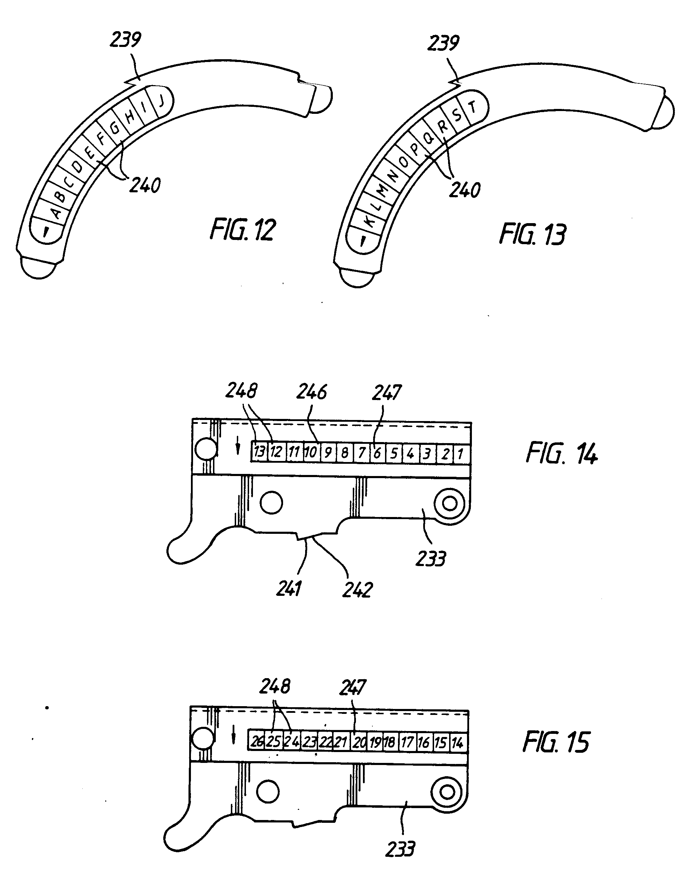

Dieser Schleuderdüngerstreuer weist einen zwei Trichterspitzen aufweisenden Vorratsbehälter auf, unter dem jeweils eine rotierend antreibbare Schleuderscheibe angeordnet ist. In dem Ausführungsbeispiel gemäß den Fig. 12 und 13 wird eine Schleuderscheibe gezeigt auf der Wurfelemente winkelverschwenkbar angeordnet sind, so daß der Abstand der äußeren Kante der Wurfschaufel von der Rotationsachse der Schleuderscheibe sowie der horizontale Einstellwinkel zwischen der Wurfschaufel und der an der Stelle ihrer Abstreukante an ihrer Umlaufbahn in Drehrichtung angelegten Tangente veränderbar ist. Zur Einstellung der Winkeleinstellung der Wurfschaufel ist eine Skala vorgesehen, welcher Farb-, Buchstaben- oder Zahlenkennzeichnungen zugeordnet sein können. Es ist dieser Druckschrift nicht entnehmbar, ob nur diese eine oder auch die anderen auf der Schleuderscheibe angeordnete Wurfschaufel winkelverschwenkbar angeordnet sein soll. Weiterhin ist dieser Druckschrift nicht entnehmbar, in welcher Weise die Farb-, Buchstaben- oder Zahlenkennzeichnungen ausgebildet sein sollen.

Ein weiterer Schleuderdüngerstreuer ist durch die nicht vorveröffentlichte deutsche Patentanmeldung P 37 07 188 bekannt. Dieser Schleuderdüngerstreuer weist einen zwei Trichterspitzen aufweisenden Vorratsbehälter auf, unter denen jeweils eine rotierend antreibbare Schleuderscheibe auf die jeweilige Getriebeausgangswelle des Winkelgetriebes werkzeuglos abnahmbar angeordnet ist. Den rotierenden Schleuderscheiben werden die sich im Vorratsbehälter befindlichen Düngemittelpartikel über im unteren Bereich des Vorratsbehälters angeordnete Auslauföffnungen, deren jeweilige Öffnungsweite sich jeweils mittels eines Schiebers beliebig einstellen läßt, zu dosiert. Die auf den Schleuderscheiben angeordneten Wurfschaufeln sorgen für eine entsprechende Verteilung der den Schleuderscheiben zugeführten Düngemittelpartikeln, in dem sie die Düngemittelpartikel gleichmäßig über die zu bestreuende Fläche abschleudern. Zur Einstellung unterschiedlicher Arbeitsbreiten unter Berücksichtigung der spezifischen Streueigenschaften der verschiedenen Düngersorten, sind die auf den Schleuderscheiben angeordneten Wurfschaufeln einstellbar befestigt. Einstellen lassen sich der jeweilige Abstand der Abstreukante der Wurfelemente von der Rotationsachse der Schleuderscheibe sowie der horizontale Anstellwinkel zwischen der Wurfschaufel und der an der Stelle ihrer Streukante an ihrer Umlaufbahn in Drehrichtung angelegten Tangente. Dadurch, daß die Wurfschaufeln der Schleuderscheiben einzustellen sind, ist es möglich, ein und dieselbe Schleuderscheibe - je nach Stellung und Länge der Wurfschaufeln - für unterschiedlichste Arbeitsbreiten und Düngersorten einzusetzen und für jeden Einsatzfall eine gleichmäßige Verteilung der Düngemittel auf der zu bestreuenden Fläche zu erreichen, sowie ein optimales Streubild zu erzeugen.

Die Einstellung der winkelverschwenkbaren und in ihrer Länge variierbaren Wurfschaufeln erfolgt nach einer Streutabelle, der die Einstelldaten für die unterschiedlichen Arbeitsbreiten und der unterschiedlichen Düngersorten unter Berücksichtigung der jeweiligen Streuguteigenschaften der auszustreuenden Düngemittel entnommen werden. Nach den Angaben der Streutabelle werden für den jeweils gewünschten Einsatzfall die auf der Schleuderscheibe bzw. an den Wurfschaufeln sich befindlichen Markierungselemente mit den entsprechenden Skalen in Einklang gebracht. Hierbei ist aber nicht berücksichtigt worden, daß die jeder einzelnen Wurfschaufel und/oder jeder Schleuderscheibe zugeordneten, für die entsprechenden Einstellmöglichkeiten vorgesehenen Skalen individuell ausgebildet sind, d.h., daß es durchaus möglich ist, den die der Streutabelle entnommenen Einstellwerte einer falschen Skala der Wurfschaufel bzw. der Schleuderscheibe zuzuordnen, bzw. die jeweiligen Einstelldaten der beiden, auf der Schleuderscheibe angeordneten Wurfschaufeln zu vertauschen, so daß die Wurfschaufeln nicht korrekt angestellt werden und keine gleichmäßige Verteilung der Düngemittel bzw. die gewünschte Streubreite der Schleuderscheiben nicht erreicht wird.

Der Erfindung liegt daher die Aufgabe zugrunde, eine unverwechselbare Einstellung der in verschiedenen Positionen der auf den Schleuderscheiben eines Schleuderdüngerstreuers befestigbaren Wurfschaufeln zu gewährleisten.

Diese Aufgabe wird in erfindungsgemäßer Weise dadurch gelöst, daß die Markierungselemente unterschiedlich ausgebildet und/oder unterschiedlich bezeichnet sind und zwar derart, daß die Markierungspunkte eindeutig und unverwechselbar jeweils einer Wurfschaufel zugeordnet sind.

Infolge dieser Maßnahmen ist es nun dem Benutzer der in erfindungsgemäßer Weise ausgerüsteten Schleuderdüngerstreuer möglich, entsprechend den jeweiligen vorherrschenden Einsatzbedingungen, d.h., der gewünschten Arbeitsbreite und unter Berücksichtigung der Streuguteigenschaften des auszustreuenden Materials, eine exakte, den jeweils gewünschten Einsatzverhältnissen entsprechende Einstellung der auf den Schleuderscheiben angeordneten Wurfschaufeln anhand der Streutabelle vorzunehmen, und eine gleichmäßige Verteilung der Düngemittel zu erreichen, sowie ein optimales Streubild zu erzeugen. Der Benutzer kann also die aus der Streutabelle entnommenen Einstelldaten nicht mehr vertauschen, d.h. einer falschen Wurfschaufel zuordnen, da dieser Einstellwert unverwechselbar nur auf einer Skala auftaucht und es nicht zu einem Übertragen des aus der Streutabelle entnommenen Wertes auf eine mit der anderen Wurfschaufel zusammenwirkenden Skala möglich ist.

Um ein Verwechseln der der Streutabelle entnommenen Einstelldaten zu verhindern, die zu einer fehlerhaften Einstellung einer Wurfschaufel führen könnten, ist erfindungsgemäß vorgesehen, daß für die jeder Wurfschaufel zugeordneten Markierungselemente zum Einstellen der Wurfschaufeln andere Bezeichnungen oder Symbole gewählt werden.

Damit es zu keiner Verwechselung der aus der Streutabelle entnommenen Einstelldaten für die Einstellung der Länge der teleskopartig ausgebildeten Wurfschaufeln und der Winkelanstellung dieser Wurfschaufeln kommt, ist erfindungsgemäß vorgesehen, daß für die Einstellung der Länge der teleskopartigen Wurfschaufeln andere Markierungselemente und/oder Bezeichnungen, Symbole wie für die Winkeleinstellung vorgesehen sind.

Damit nicht für jeden Einsatzfall, d.h., für das "Normal-, Breit-, und Grenzstreuen" jeweils spezielle Schleuderscheiben mit entsprechenden Skalen hergestellt werden müssen, ist weiterhin erfindungsgemäß vorgesehen, daß die Skalen in Aussparungen, welche sich in den Schleuderscheiben befinden, angeordnet sind, und daß die Skalen aus Kunststoff hergestellt sind. Hierbei ist weiterhin vorgesehen, daß die Skalen an ihren einander gegenüberliegenden Stirnseiten jeweils durch die Aussparungen fassende Halterungen aufweisen, während die Längsseiten unter die Schleuderscheibe fassende Streifen aufweisen. Hierdurch lassen sich die als Einsatzstücke ausgebildeten Skalen auf einfachste Weise an den Schleuderscheiben befestigt, wobei es möglich ist, die für den jeweiligen Einsatzfall, d.h., für das Normal-, Breit-, oder Grenzstreuen benötigten Skalen gegeneinander austauschen. Hierdurch ist es möglich, an ein und derselben Schleuderscheibe verschiedenartig ausgebildete Wurfschaufeln je nach vorliegendem Einsatzfall zu befestigen.

Weiterhin ist erfindungsgemäß vorgesehen, daß unterhalb der Skalen und der Schleuderscheibe mit der Wurfschaufel verschwenkbare Halteelemente angeordnet sind. Hierdurch werden die von unten in die Aussparungen der Schleuderscheiben eingesetzten Skalen in besonders einfacher Weise zusätzlich gehalten und abgestützt.

Weitere Einzelheiten der Erfindung sind den übrigen Unteransprüchen, der Beispielsbeschreibung sowie den Zeichnungen zu entnehmen. Hierbei zeigt

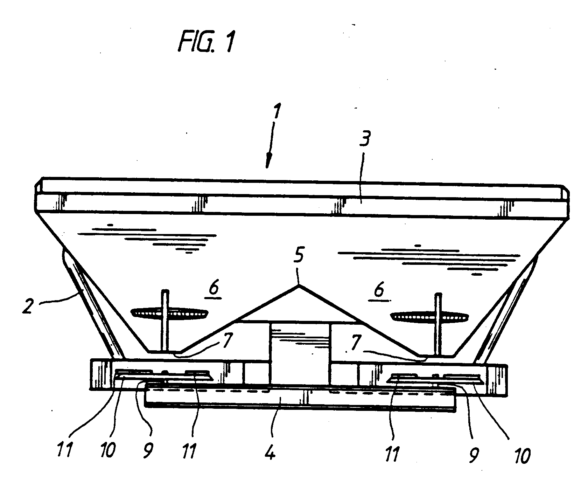

Fig. 1     den in erfindungsgemäßer Weise ausgebildeten Schleuderdüngerstreuer in der Ansicht von hinten,

Fig. 2     die rechte Schleuderscheibe mit winkelverschwenkbaren Wurfschaufeln für das "Normalstreuen" in der Draufsicht,

Fig. 3     die der einen Wurfschaufel zugeordneten Einstellskala in der Draufsicht und vergrößertem Maßstab,

Fig. 4     die der anderen Wurfschaufel zugeordnete Einstellskala in der Daufsicht und vergrößertem Maßstab,

Fig. 5     die in erfindungsgemäßer Weise ausgerüstete rechte Schleuderscheibe mit winkelverschwenkbaren Wurfschaufeln für das "Breitstreuen" in der Draufsicht,

Fig. 6     die Einstellskala für die eine Wurfschaufel der "Breitstreuscheibe" in Draufsicht und vergrößertem Maßstab,

Fig. 7     die andere Einstellskala der "Breitstreuscheibe" in der Draufsicht und vergrößertem Maßstab,

Fig. 8     die in erfindungsgemäßer Weise ausgerüstet rechte Schleuderscheibe mit den Wurfschaufeln für das "Grenzstreuen" in der Draufsicht,

Fig. 9     die Einstellskala für die eine Wurfschaufel der "Grenzstreuscheibe" in Draufsicht und vergrößertem Maßstab,

Fig. 10     die andere Einstellskals der "Grenzstreuscheibe" in der Draufsicht und vergrößertem Maßstab,

Fig 11     die rechte Schleuderscheibe mit winkelverschwenkbaren und teleskopartig ausgebildeten Wurfschaufeln für das "Normal- und Breitstreuen" in der Draufsicht,

Fig. 12     in in erfindungsgemäßer Weise ausgebildete Einstellskala für die eine Wurfschaufeln der Schleuderscheibe gemäß Fig. 11 in der Draufsicht und vergrößertem Maßstab,

Fig. 13     die andere erfindungsgemäß ausgebildete Einstellskala für die andere Wurfschaufel der Schleuderscheibe gemäß Fig. 11 in der Draufsicht und vergrößertem Maßstab,

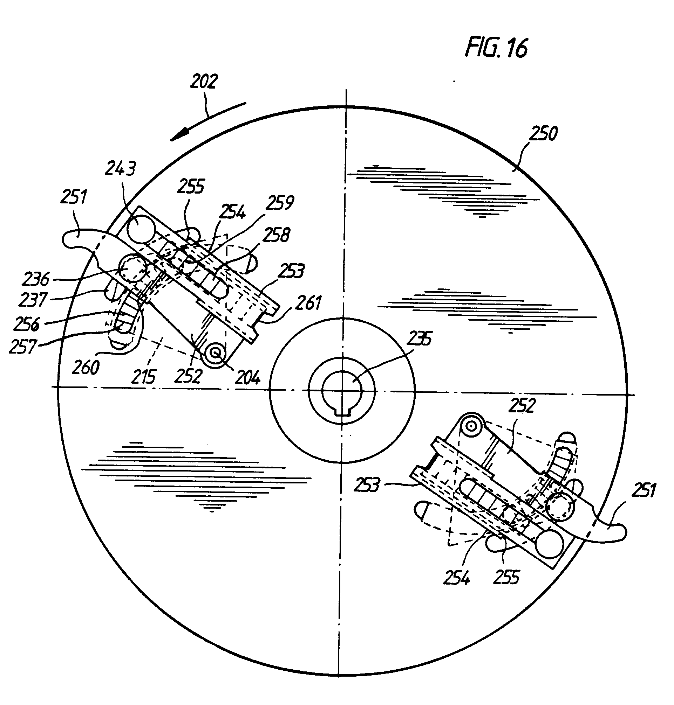

Fig. 14     der innere Teil der verschwenkbaren, teleskopartig ausgebildeten Wurfschaufel der Schleuderscheibe gemäß Fig 11. mit der in erfindungsgemäßer Weise ausgebildeten Einstellskala in der Draufsicht und vergrößertem Maßstab,

Fig. 15 der verschwenkbare innere Teil der anderen teleskopartig ausgebildeten Wurfschaufel der Schleuderscheibe gemäß Fig. 11 mit der in erfindungsgemäßer Weise ausgebildeten Einstellskala in der Draufsicht und vergrößertem Maßstab,

Fig. 16 die rechte Schleuderscheibe mit winkelverschwenkbaren und teleskopartig ausgebildeten Wurfschaufeln für das "Grenzstreuen" in der Draufsicht,

Fig. 17 die in erfindungsgemäßer Weise ausgebildete Einstellskala der einen Wurfschaufel der "Grenzstreuscheibe mit den teleskopartig ausgebildeten Wurfschaufeln gemäß Fig. 16,

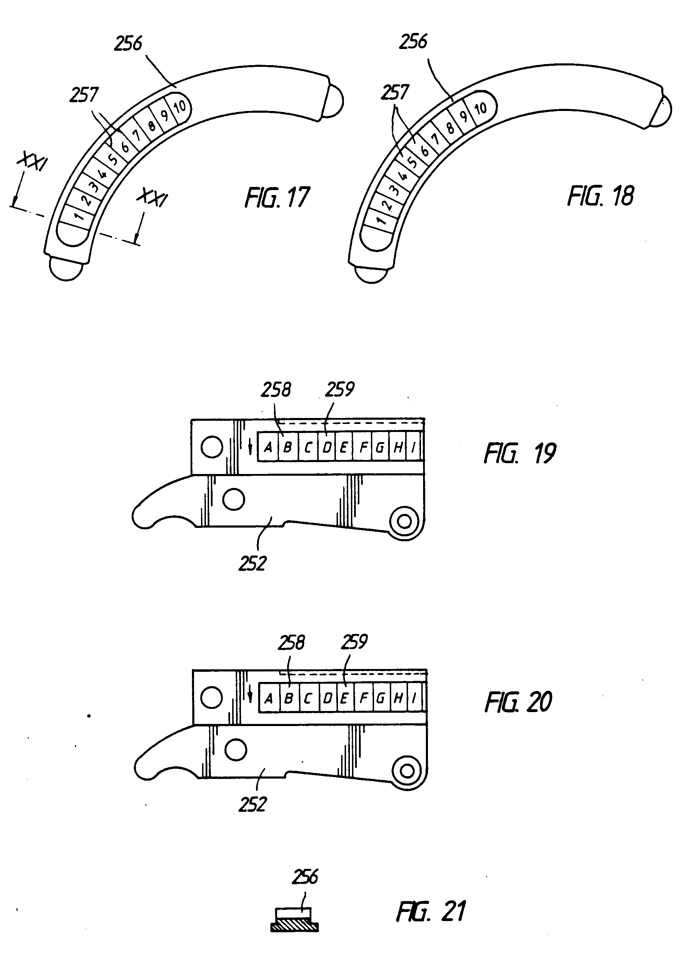

Fig. 18 die in erfindungsgemäßer Weise ausgebildete Einstellskala der "Grenzstreuscheibe" gemäß Fig. 16,

Fig. 19 das innere Teil der verschwenkbaren, teleskopartig ausgebildeten Wurfschaufel für das "Grenzstreuen" mit der erfindungsgemäßen Einstellskala in der Draufsicht und vergrößertem Maßstab,

Fig. 20 das andere innere, verschwenkbare Teil der teleskopartig ausgebildeten Wurfschaufel der "Grenzstreuscheibe" gemäß Fig. 16 mit der erfindungsgemäßen Einstellskala in der Draufsicht und vergrößertem Maßstab und

Fig. 21 die Einstellskala gemäß Fig. 17 in der Ansicht XXI - XXI.

Der Schleuderdüngerstreuer 1 ist mit dem Rahmen 2 ausgestattet, an dem der Vorratsbehälter 3 und ein Winkelgetriebe 4 angebracht sind. Hierbei ist der untere Bereich des Vorratsbehälters 3 durch ein dachförmiges Mittelteil 5 in zwei Auslauftrichter 6 unterteilt, in deren Bodenplatten 7 sich nicht näher dargestellte, bekannte Auslauföffnungen befinden. Diese Auslauföffnungen sind mit Hilfe von schieberförmigen Dosierelementen für sich verschließbar und in unterschiedlichen Öffnungsweiten einstellbar.

Unterhalb der Auslauföffnungen sind quer zur Fahrtrichtung 8 auf den Ausgangswellen 9 des Winkelgetriebes 4 die Schleuderscheiben 10 nebeneinander angeordnet. Auf diesen Schleuderscheiben 10 sind jeweils zwei Wurfschaufeln 11 befestigt. Die Befestigung der Schleuderscheiben 10 auf den Ausgangswellen 9 des Winkelgetriebes 4 ist derart ausgebildet, daß sich die Schleuderscheiben 10 vorzugsweise werkzeuglos an bzw. von diesen Ausgangswellen 9 montieren bzw. demontieren lassen.

Den einzelnen Schleuderscheiben 10 werden die sich im Vorratsbehälter 3 des Schleuderdüngerstreuers 1 befindliche Düngemittel in genau einstellbaren Mengen zugeführt. Die rotierenden Schleuderscheiben 10 verteilen den auf die jeweilige Schleuderscheibe 10 auftreffenden Düngemittelstrom gleichmäßig über die genau einstellbare Arbeitsbreite S des Schleuderdüngerstreuers 1.

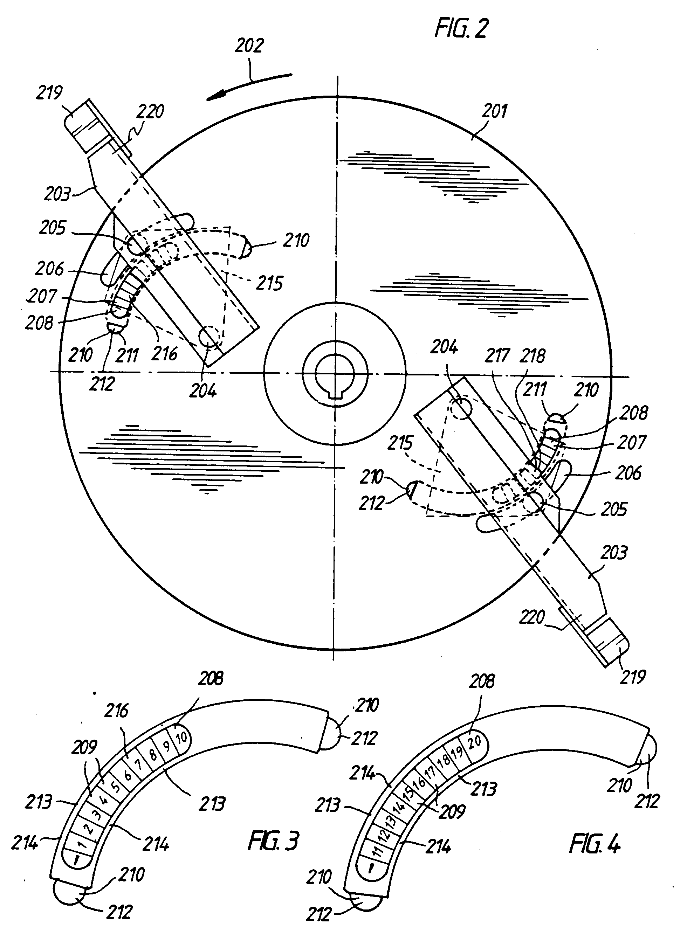

Die Fig. 2 zeigt die rechte Schleuderscheibe 10 des Schleuderdüngerstreuers 1, die als "Normaldstreuscheibe" 201 ausgebildet ist. Die Schleuderscheiben 10 des Schleuderdüngerstreuers 1 werden gegenläufig angetrieben, wobei die rechte Schleuderscheibe 10 gemäß Fig. 2 in Pfeilrichtung 202 angetrieben wird. Die Schleuderscheibe 201 weist die beiden Wurfschaufeln 203 auf, die für das sog. "Normalstreuen" vorgesehen sind. Die jeweiligen Wurfschaufeln 203 sind winkelverschwenkbar um den Drehpunkt 204 auf der Schleuderscheibe 201 befestigt. Diese winkelverschwenkbaren Wurfschaufeln 203 weisen den Festsetzmechanismus 205 auf, der beispielsweise als lösbare Schraube ausgebildet ist und mit dem sich in der Schleuderscheibe 201 befindlichen Langloch 206 zusammenwirkt. Parallel zu dem Langloch 206 ist die Aussparung 207 in die Schleuderscheibe 201 eingestanzt. In diese Aussparung 207 ist die Einstellskala 208 mit ihren Markierungspunkten 209 von unten in die Schleuderscheibe 201 eingesetzt. Diese Skala 208 ist beispielsweise aus Kunststoff hergestellt und weist an ihren gegenüberliegenden Seiten 210 durch die Aussparungen 211 fassende Halterungen 212, die beispielsweise als Schnappverschlüsse ausgebildet sind, auf. Zur besseren Abstützung gegenüber der Schleuderscheibe 201 weisen die in die Aussparungen 207 eingesetzten Skalen 208 jeweils an ihren Längsseiten 213 unter die Schleuderscheibe 201 fassende Streifen 214 auf. Damit die Einstellskala 208 auch unterhalb der Schleuderscheibe 201 abgestützt wird, sind unterhalb der jeweiligen Skala 208 und der Schleuderscheibe 201 mit den Wurfschaufeln 203 jeweils verschwenkbare Halteelemente 215 angeordnet. Dieses mit der jeweiligen Wurfschaufel 203 verschwenkbare Halteelement 215 ist an dem Drehpunkt 204 der Wurfschaufel 203 und dem Festsetzmechanismus 205 befestigt. Die jeweiligen Halteelemente 215 verhindern, daß die Einstellskalen 208 aus den Aussparungen 207 der Schleuderscheibe 201 herausfällen.

Das Anzeigenfeld 216 der Einstellskala 208 weist die gleiche Kontur auf, wie die Aussparung 207 der Schleuderscheibe 201. Damit die Düngemittelpartikel gleichmäßig über den Arbeitsbereich des Schleuderdüngerstreuers 1 verteilt werden, sind die Wurfschaufeln 203 dieser Schleuderscheiben 201 unterschiedlich lang ausgebildet. Die Anordnung unterschiedlich langer Wurfschaufeln 203 auf der Schleuderscheibe 201 gewährleistet, daß die Düngemittelpartikel gleichmäßig über die gesamte Arbeitsbreite verteilt werden. Bei der Schleuderscheibe 201 gemäß Fig. 2 lassen sich nun die Anstellwinkel der Wurfschaufeln 203 unterschiedlich einstellen, indem die Wurfschaufeln 203 um den Drehpunkt 204 im Bereich des Langloches 206 verschwenkt werden. Um nun bei einer ganz bestimmten Düngersorte, unter Berücksichtigung der speziellen Streuguteigenschaften des auszustreuenden Düngers, eine ganz bestimmte Arbeitsbreite zu erzielen, ist es erforderlich, daß die Wurfschaufeln 203 zur Erzeugung eines optimalen Streubildes unterschiedlich angestellt werden. Aus diesem Grunde sind die Skalen 208 der einzelnen Wurfschaufeln 203 mit unterschiedlichen Markierungspunkten ausgebildet, so daß die einzelnen Markierungspunkte der Einstellskalen 208 jeweils nur einmal vorhanden sind. Hierdurch wird gewährleistet, daß die Wurfschaufeln 203 unverwechselbar einstellbar sind, d.h. es ist nicht möglich, die aus der Streutabelle entnommenen Einstelldaten, die einer bestimmten Wurfschaufel 203 zugeordnet werden müssen, für die Wurfschaufeln 203 zu vertauschen.

Soll nun beispielsweise eine ganz bestimmte Düngersorte über einen Streubereich von 16 m verteilt werden, schlägt der Benutzer des Schleuderdüngerstreuers 1 die zu dem Streuer zugehörige Streutabelle auf und ermittelt die Einstelldaten für die winkelverschwenkbaren Wurfschaufeln 203 der als Normalstreuscheibe 201 ausgebildeten Schleuderscheibe für die auszustreuenden Düngermittelsorten bei der gewünschten Streubreite. Werden hierfür nun der Streutabelle beispielsweise die Daten

"5" und "16"

entnommen, werden die Wurfschaufeln 203 der Schleuderscheibe 201 nach Lösen der jeweiligen Festsetzmechanismen 205 derart verschwenkt, bis daß diese entsprechenden Zahlen bzw. Markierungspunkte 209 des Anzeigenfeldes 216 an der als Zeiger 217 ausgebildeten Kante 218 der jeweiligen Wurfschaufel 203 ablesbar sind. Dadurch, daß die Anzeigenfelder 216 der den beiden Wurfschaufeln 203 zugeordneten Skalen 208 unterschiedlich ausgebildet sind, ist eine unverwechselbare Einstellung der winkelverschwenkbaren Wurfschaufeln 203, der als Normalstreuscheibe 201 ausgebildeten Schleuderscheibe, gewährleistet. Streufehler durch unsachgemäße Einstellung der Wurfschaufeln 203 sind somit völlig ausgeschlossen.

Damit die Streuscheiben 201 auch für die sog. Spätdüngung eingesetzt werden können, weisen die Wurfschaufeln 203 jeweils an ihren äußeren Enden als sog. Schwenkschaufeln ausgebildete Teile 219 auf, welche um die Schwenkachse 220 in aufrechter Ebene schwenkbar sind. Dieses Teil 219 läßt sich in zwei verschiedene Positionen arretieren, so daß sich die Flugkurve der von den Wurfschaufeln 203 abgeschleuderten Düngemittelpartikel verändern läßt, so daß sich Pflanzen in unterschiedlichen Wachstumsstadien düngen lassen.

Damit nun bei der Montage der einzelnen Skalen 208 an den Schleuderscheiben 201 keine Verwechselung vorgenommen werden kann, sind die Einstellskalen 208 unterschiedlich lang ausgebildet, d.h., die sich gegenüberliegenden Stirnseiten 210 weisen einen unterschiedlich großen Abstand voneinander auf, so daß sie nur in eine bestimmte Aussparung 207 bzw. 211 passen und so nicht vertauscht werden können. Hierdurch werden auf jeder Scheibe 201 zwei unterschiedliche Skalen 208 montiert, so daß jeder Wurfschaufel 203 eine eigene spezielle Skala 208 zugewiesen wird. Hierdurch sind die einzelnen Stellungen der Wurfschaufeln 203 genau definiert und somit unverwechselbar.

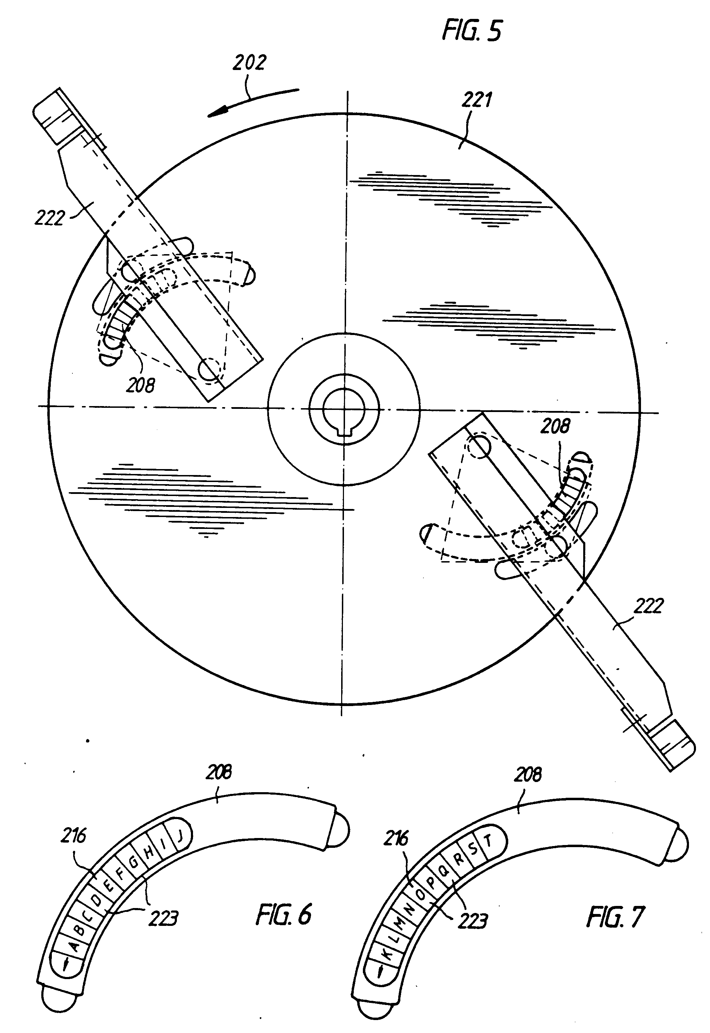

Bei der Schleuderscheibe 221 gemäß Fig. 5 handelt es sich um die rechte Schleuderscheibe des Schleuderdüngerstreuers 1, die für das sog. "Breitstreuen" ausgebildet ist. Diese Schleuderscheibe 221 unterscheidet sich nur durch die längeren Wurfschaufeln 222, die die Düngemittel über einen weiteren Streubereich abschleudern, von der Normalstreuscheibe 201 gemäß Fig. 2. Die Anzeigenfelder 216 der Einstellskalen 208 dieser Breitstreuscheibe 221 weisen ebenfalls für die beiden ungleich langen Wurfschaufeln 222 ungleiche Markierungspunkte 223 bzw. Ziffern auf, damit auch hier ein unverwechselbares Einstellen der winkelverschwenkbaren Wurfschaufeln 222 der als Breitstreuscheibe 221 ausgebildeten Schleuderscheibe gewährleistet ist.

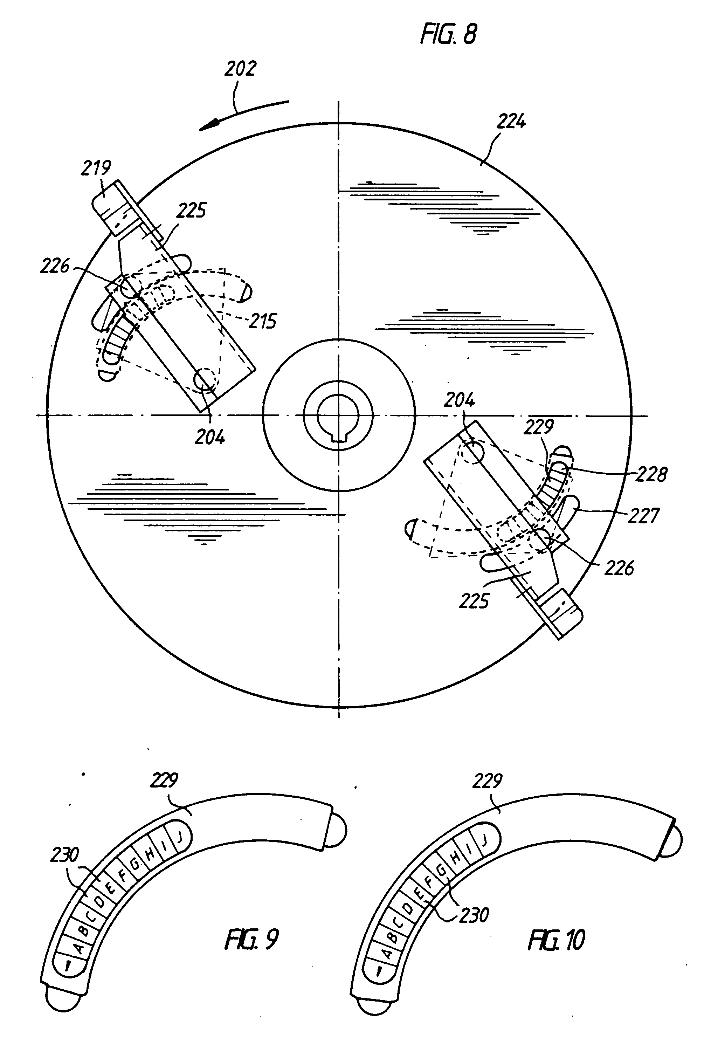

Bei der Schleuderscheibe 224 gemäß Fig. 8 handelt es sich um eine rechte Schleuderscheibe des Schleuderdüngerstreuers 1, die als Grenzstreuscheibe ausgebildet ist. Die Grenzstreuscheibe 224 weist die gleich langen Wurfschaufeln 225 auf, die ebenfalls winkelverschwenkbar um den Drehpunkt 204 an der Schleuderscheibe 224 befestigt sind. Die Wurfschaufeln 225 weisen den Festsetzmechanismus 226 auf, der beispielsweise als lösbare Schraube ausgebildet ist, und mit dem in der Schleuderscheibe 224 sich befindlichen Langloch 227 zusammenwirkt. Parallel zum Langloch 227 befindet sich die ebenfalls als Langloch ausgebildete Aussparung 228 in der Schleuderscheibe 224. In diese Aussparung 228 ragt von unten das als Kunststoffteil ausgebildete Einstellskalenelement 229 hinein. Für die als Grenzstreuscheibe eingesetzte Schleuderscheibe 224 sind Einstellskalen 229 mit gleichen Markierungen bzw. Zeichen 230 für beide Wurfschaufeln 225 vorgesehen, da die Einstellung beider Wurfschaufeln 225 gleich ist. Dieses ist erforderlich, um ein am Feldrand steil abfallendes Streubild zu erzeugen.

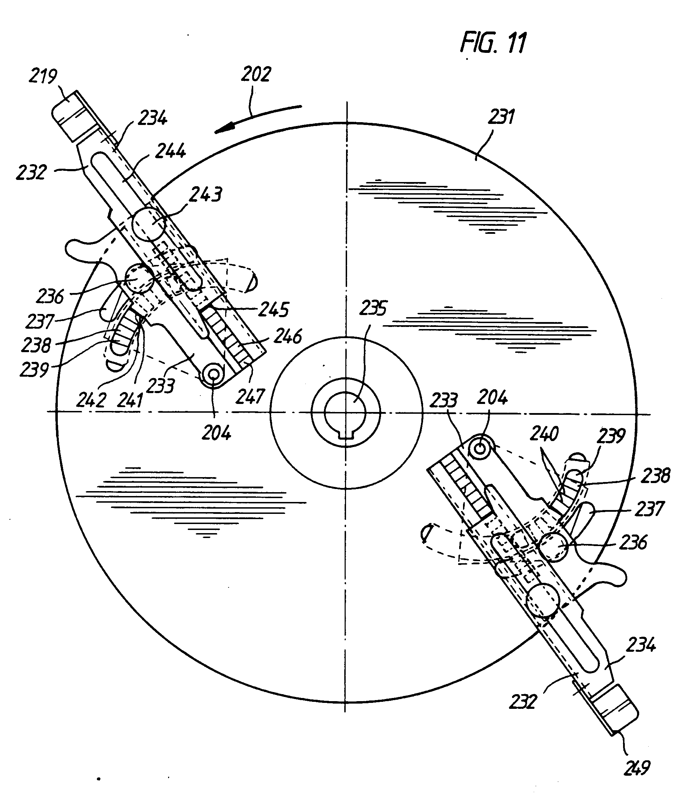

Bei der Schleuderscheibe 231 gemäß Fig. 11 handelt es sich um eine Schleuderscheibe die sich gleichzeitig für das sog. "Normal- und Breitstreuen" einsetzen läßt. Diese Schleuderscheibe 231 weist die Wurfschaufeln 232 auf. Die jeweiligen Wurfschaufeln 232 bestehen aus den zwei teleskopartig in Längsrichtung der Wurfschaufeln 232 zueinander verschiebbaren und in verschiedenen Längen der Wurfschaufeln 232 festsetzbaren Teile 233 und 234. Diese Wurfschaufeln 232 sind derart ausgebildet, daß der innere Teil 233 der Wurfschaufel 232 in radialer Richtung unverschiebbar ist. Diese längenveränderbaren Wurfschaufeln 232 sind jeweils winkelverschwenkbar auf der Schleuderscheibe 231 angeordnet. Hierbei befindet sich die Schwenkachse 204 einer jeden Wurfschaufel 232 in der der Rotationsachse 235 der jeweiligen Schleuderscheibe 231 zugewandten Hälfte des inneren Teiles 233 der Wurfschaufel 232. Der Festsetzmechanismus 236 der winkelverschwenkbaren Schaufeln 232 befindet sich in der dem äußeren Rand der Schleuderscheibe 231 zugewandten Hälfte des inneren Teiles 233 der Wurfschaufel 232. Dieser Festsetzmechanismus 236 ist beispielsweise als lösbare Schraube ausgebildet und wirkt mit dem sich in der Schleuderscheibe 231 befindlichen Langloch 237 zusammen. Parallel zu dem Langloch 237 befindet sich die Aussparung 238 in der Schleuderscheibe 231, in der sich die Einstellskala 239 mit den Markierungen 240 befindet, die die verschiedenen Positionen darstellen, in denen die winkelverschwenkbaren Wurfschaufeln 232 einstellbar sind. Hierzu wirkt die Kante 241 des inneren Teiles 233 der Wurfschaufel 232 als Zeiger 242 mit den Markierungen 240 der Einstellskala 239 zusammen.

Die jeweilige Lage des inneren Teiles 233 und des äußeren Teiles 234 der Wurfschaufel 232 zueinander wird mittels des als Schraubverbindung ausgebildeten Festsetzmechanismuses 243 bestimmt. Dieser Festsetzmechanismus 243 zum Festsetzen der zueinander in Längsrichtung der Wurfschaufeln 232 verschiebbaren Teile 233 und 234 ist zwischen den oberen Schenkeln der zueinander verschiebbaren Teile 233 und 234 angeordnet. Das äußere Teil 234 weist das Langloch 244 auf und ist somit stufenlos gegenüber dem inneren Teil 233 verstellbar. Die Kante 245 des ausziehbaren äußeren Teiles 234 wirkt mit der in der Vertiefung 246 des oberen Schenkels des inneren Teiles 233 angeordneten Skala 247 zusammen.

Damit nun die Düngemittel gleichmäßig über die zu bestreuende Fläche verteilt werden können, ist es notwendig, die Wurfschaufeln 232 der Schleuderscheibe 231 entsprechend der gewünschten Arbeitsbreite und des ausstreuenden Düngematerials, unter Berücksichtigung des jeweiligen Streuguteigenschaften, individuell anhand einer Streutabelle einzustellen. Hierzu ist es erforderlich, daß die beiden Wurfschaufeln 232 der Schleuderscheibe 231 in ihrem Winkel unterschiedlich angestellt werden und die Länge einer jeden Wurfschaufel 232 individuell anhand der Angaben der Streutabelle eingestellt werden. Damit es auch hier nicht zu Verwechselungen bei der Einstellung der Länge der teleskopartigen Wurfschaufeln 232 kommt, weisen die Skalen 247 der inneren Teile 233 unterschiedliche Bezeichnungen 248 auf. Um nun eine unverwechselbare Winkeleinstellung ebenfals der Wurfschaufeln 232 der Schleuderscheibe 240 vorzunehmen, weisen die Skalen 239 für die Winkelverstellung unterschiedliche Bezeichnungen 231 auf, so daß die Winkeleinstellung unverwechselbar wird.

Soll jetzt beispielsweise eine ganz bestimmte Düngersorte über einen Arbeitsbereich von 20 m ausgebracht werden, so sind in der Streutabelle unter der Berücksichtigung der jeweiligen Düngersorte und der gewünschten Arbeitsbreite beispielsweise die Angaben:

"D" und "9"

"O" und "20"

angegeben. Da diese Bezeichnungen nur einmal auftauchen, lassen sich die Wurfschaufeln 232 exakt und unverwechselbar einstellen. Dem Landwirt ist nun bekannt, daß er die entsprechende Wurfschaufel 232, die mit der jeweiligen Einstellskala 239, auf der sich der Buchstabe "D" befindet, derart verschwenken muß, daß die Kante 241 mit der mit "D" gekennzeichneten Markierung 240 deckungsgleich ist. In dieser Position wird der Festsetzmechanismus 236 befestigt. Zur Erleichterung der Einstellung der verschiedenen Positionen läßt sich die Schraubverbindung 236 beispielsweise mit einer Flügelmutter versehen. Als nächstes löst der Landwirt den Festsetzmechanismus 243, der beispielsweise auch aus zwei nebeneinander angeordneten Schraubverbindungen bestehen kann und verschiebt das äußere Teil 234 gegenüber dem inneren Teil 233 der Wurfschaufel 232 so lange, bis die Kante 245 des äußeren Teiles 234 deckungsgleich mit der auf der Skala 247 angebrachten Ziffer "9" ist. In dieser Stellung wird das äußere Teile 234 der Wurfschufel 232 mittels des als Schraubverbindung ausgebildeten Festsetzmechanismuses 243 arretiert.

Nun wird die andere Wurfschaufel 232 entsprechend den Angaben ("0" und "20") der Streutabelle eingestellt. Diese Einstellung erfolgt in der bereits beschriebenen Weise. Mittels dieser winkelverschwenkbar auf den jeweiligen Schleuderscheiben 231 angeordneten, teleskopartig ausgebildeten Wurfschaufeln 232 läßt sich der Abstand der Abstreukante 249 und der jeweilige horizontale Anstellwinkel zwischen der Wurfschaufel 232 und der an der Stelle ihrer Abstreukante 249 an ihrer Umlaufbahn in Drehrichtung angelegten Tangente exakt einstellen. Hierdurch ist es möglich, alle handelsüblichen Düngersorten gleichmäßig unter Berücksichtigung ihrer jeweiligen Streueigenschaften über die genau einstellbaren Arbeitsbreiten zu verteilen.

Die Schleuderscheibe 250 gemäß Fig. 16 ist mit zwei teleskopartigen in Längsrichtung der Wurfschaufeln 251 zueinander verschiebbaren und bei verschiedenen Längen der Wurfschaufeln 251 festsetzbaren Teilen 252 und 253 ausgerüstet. Die Wurfschaufeln 251 sind ebenfalls winkelverschwenkbar auf der Schleuderscheibe 250, die als Grenzstreuscheibe ausgebildet ist, angeordnet. Bei diesen teleskopartig ausgebildeten Wurfschaufeln 251 für das Grenzstreuen handelt es sich im wesentlichen um kürze Wurfschaufeln 251, als bei den Wurfschaufeln der Schleuderscheibe 231 gemäß Fig. 11. Diese Grenzstreuwurfschaufeln 251 unterscheiden sich nur in der Ausbildung des verschiebbaren äußeren Teiles 253, daß bei diesen sog. Grenzstreuwurfschaufeln 251 wesentlich kürzer ist, als das äußere Teil 234 der in der vorhergehenden Fig. 11 beschriebenen Wurfschaufeln 232. Das innere Teil 252 der Grenzstreuwurfschaufeln 251 unterscheidet sich nur hinsichtlich eines verkürzten Rückenteiles 254 von dem inneren Teil 233 der Wurfschaufel 232 der Schleuderscheibe 231 gemäß Fig. 11. Dieses Verkürzen des Rückenteiles 254 wird erforderlich, um den Abstand der Abstreukante 255 von der Rotationsachse 235 der Schleuderscheibe 250 bei den Grenzstreuwurfschaufeln 251 wesentlich zu verringern. Dieses ist erforderlich, um die Arbeitsbreite der mit diesen Grenzstreuwurfschaufeln 251 versehenen Schleuderscheiben 250 wesentlich zu verringern um ein am Feldrand steil abfallendes Streubild zu erhalten. Die jeweilige Einstellung dieser winkelverschwenkbaren Grenzstreuwurfschaufeln 251 hinsichtlich ihrer Länge und ihres Anstellwinkels erfolgt in bereits erwähnter Weise nach den entsprechenden Angaben einer Streutabelle. Bei dieser als Grenzstreuscheibe ausgebildeten Schleuderscheibe 250 sind die Einstellskalen für die Einstellung der Winkelverschwenkbarkeit und der Länge jeweils gleich ausgebildet. Die Einstellskala 256 einer jeden Wurfschaufel 251 weist die gleichen Markierungselemente 257 für die Einstellung der Winkelverschwenkbarkeit auf. Die jeweiligen Einstellskalen 258 für die Längenveränderung der Wurfschaufeln 251 weisen ebenfalls die gleichen Markierungselemente 259 für die beiden, auf der Schleuderscheibe 250 jeweils angeordneten Wurfschaufeln 251 auf. Die Kante 260 des inneren Teiles 252 der Wurfschaufel 250 wirkt mit der Einstellskala 256 für die Winkelverschwenkbarkeit zusammen, während die Kante 261 des äußeren Teiles 253 der Wurfschaufel 250 mit der Einstellskala 258 für die Längenveränderung zusammenwirkt.

## Patentansprüche

1. Schleuderdüngerstreuer zum Verteilen von Düngemitteln und dgl, mit einem Vorratsbehälter, der Dosierelemente für zumindest zwei quer zur Fahrtrichtung angeordnete Schleuderscheiben aufweist und jede Schleuderscheibe (201,221,224,231,250) mit zumindest zwei Wurfschaufeln (203,222,225,232,251) ausgestattet ist, wobei der Abstand der äußeren Kante der Wurfschaufel von der Rotationsachse der Schleuderscheibe sowie der horizontale Abstellwinkel zwischen der Wurfschaufel und der an der Stelle ihrer Abstreukante an ihrer Umlaufbahn in Drehrichtung angelegten Tangente veränderbar ist, wobei sich für jede Wurfschaufel (203,222,225,232,251) zur Einstellung des horizontalen Abwurfwinkels Markierungselemente (209,223,230,240,257) auf der Schleuderscheibe (201,221,224,231,250) befinden, dadurch gekennzeichnet, daß die Markierungselemente (209,223,230,240,257) unterschiedlich ausgebildet und/oder unterschiedlich bezeichnet sind und zwar derart, daß die Markierungspunkte (209,223,230,240,257) eindeutig und unverwechselbar jeweils einer Wurfschaufel (203,222,225,232,251) zugeordnet sind.

2. Schleuderdüngerstreuer nach Anspruch 1, dadurch gekennzeichnet, daß für die jeder Wurfschaufel (203,222,225,232,251) zugeordneten Markierungselemente (209,223,230,240,257) zum Einstellen der Wurfschaufel (203,222,225,232,251) andere Bezeichnungen oder Symbole gewählt werden.

3. Schleuderstreuer nach Anspruch 1, wobei jede Wurfschaufel aus zumindest zwei teleskopartigen, in Längsrichtung der Wurfschaufel zueinander verschiebbaren und bei verschiedenen Längen der Wurfschaufel festsetzbaren Teilen besteht, wobei der innere Teil der Wurfschaufel in radialer Richtung unverschiebbar, jedoch winkelverschwenkbar auf der Schleuderscheibe angeordnet ist, wobei der sich an den inneren Teilen anschließende Teil der Wurfschaufel gegenüber dem verschwenkbaren Teil der Wurfschaufel in Längsrichtung der Wurfschaufel verschiebbar ist, wobei dem verschwenkbaren inneren Teil und dem verschiebbaren Teil jeweils Markierungen zugeordnet sind, dadurch gekennzeichnet, daß für die Einstellung der Länge der teleskopartigen Wurfschaufeln (232,251) andere Markierungselemente (248,258) und/oder Bezeichnungen, Symbole wie für die Winkeleinstellung vorgesehen sind.

4. Schleuderdüngerstreuer nach einem oder mehreren der vorstehenden Ansprüche, dadurch gekennzeichnet, daß die Skalen (208,229,239,247,258,256), die den Wurfschaufeln (203,222,225,232,251) zu deren Einstellung zugeordnet sind, verschiedenartige Bezeichnungen (209,223,230,240,248,259) aufweisen.

5. Schleuderdüngerstreuer nach einem oder mehreren der vorstehenden Ansprüche, dadurch gekennzeichnet, daß die Skalen (208,229,239,247,258,256), die den Wurfschaufeln (203,222,225,232,251) zu deren Einstellung zugeordnet sind, verschiedenartig (wie Form oder Größe, einen Pfeil aufweisende Markierung) ausgebildet sind.

6. Schleuderdüngerstreuer nach einem oder mehreren der vorstehenden Ansprüche, dadurch gekennzeichnet, daß die Skalen (208,229,239,247,258,256) in Aussparungen (207,211), welche sich in den Schleuderscheiben (201,221,224,231,250) befinden, angeordnet sind, daß die Skalen aus Kunststoff hergestellt sind.

7. Schleuderdüngerstreuer nach Anspruch 6, dadurch gekennzeichnet, daß die Skala (208,229,239,247,258,256) an den einander gegenüberliegenden Stirnseiten (210) jeweils durch die Aussparungen (211) fassende Halterungen (212) aufweist, während die Längsseiten (213) unter die Schleuderscheibe (201,221,224,231,250) fassende Streifen aufweisen.

8. Schleuderdüngerstreuer nach Anspruch 7, dadurch gekennzeichnet, daß unterhalb der Skala (208,229,239,247,258,256) und der Schleuderscheibe (201,221,224,231,250) mit der Wurfschaufel (203,222,225,232,251) verschwenkbare Halteelemente (215) angeordnet sind.

9. Schleuderdüngerstreuer nach Anspruch 1, dadurch gekennzeichnet, daß auf jeder Schleuderscheibe (201,221, 224,231,250) unterschiedlich lange Wurfschaufeln (203,222,225,232,251) angeordnet sind und/oder die äußeren Kanten der Wurfschaufeln (203,222, 225,232,251) unterschiedliche Abstände zur Drehachse der Schleuderscheibe aufweisen und/oder die Wurfschaufel mit unterschiedlichen Winkeln angestellt sind.

**Claims**

1. Centrifugal fertilizer broadcaster for distributing fertilizers and similar materials, including a hopper, which includes metering members for at least two centrifugal discs, which are disposed transversely relative to the direction of travel, and each centrifugal disc (201, 221, 224, 231, 250) is provided with at least two throwing vanes (203, 222, 225, 232, 251), the spacing between the outer edge of the throwing vane and the rotary axis of the centrifugal disc being adjustable, and the horizontal throwing angle between the throwing vane and the tangent, which is where its dispersing edge executes its circular path in the direction of rotation, being adjustable, marking elements (209, 223, 230, 240, 257) being situated on the centrifugal disc (201, 221, 224, 231, 250) for each throwing vane (203, 222, 225, 232, 251) for setting the horizontal discharge angle, characterised in that the marking elements (209, 223, 230, 240, 257) have different configurations and/or different designations, such that the marking points (209, 223, 230, 240, 257) are each clearly and non-confusibly associated with a respective throwing vane (203, 222, 225, 232, 251).

2. Centrifugal fertilizer broadcaster according to claim 1, characterised in that other designations or symbols are selected for the marking elements (209, 223, 230, 240, 257), which are associated with each throwing vane (203, 222, 225, 232, 251), for setting the throwing vane (203, 222, 225, 232, 251).

3. Centrifugal broadcaster according to claim 1, each throwing vane comprising at least two telescopic portions, which are displaceable in the longitudinal direction of the throwing vane relative to each other and are securable at different lengths of the throwing vane, the inner portion of the throwing vane being disposed on the centrifugal disc so as to be non-displaceable in a radial direction, but so as to be angularly pivotable, the portion of the throwing vane communicating with the inner portions being displaceable in the longitudinal direction of the throwing vane relative to the pivotable portion of the throwing vane, and markings being associated with the pivotable inner portion and the displaceable portion rspectively, characterised in that other marking elements (248, 258) and/or designations, symbols such as for angle setting, are provided for setting the length of the telescopic throwing vanes (232, 251).

4. Centrifugal fertilizer broadcaster according to one or more of the preceding claims, characterised in that the scales (208, 229, 239, 247, 258, 256), which are associated with the throwing vanes (203, 222, 225, 232, 251) for the setting thereof, have different designations (209, 223, 230, 240, 248, 259).

5. Centrifugal fertilizer broadcaster according to one or more of the preceding claims, characterised in that the scales (208, 229, 239, 247, 258, 256), which are associated with the throwing vanes (203, 222, 225, 232, 251) for the setting thereof, have different configurations (such as form or size, a marking having an arrow).

6. Centrifugal fertilizer broadcaster according to one or more of the preceding claims, characterised in that the scales (208, 229, 239, 247, 258, 256) are disposed in recesses (207, 211), which are situated in the centrifugal discs (201, 221, 224, 231, 250), and in that the scales are made of plastics material.

7. Centrifugal fertilizer broadcaster according to claim 6, characterised in that each scale (208, 229, 239, 247, 258, 256) has respective holders (212), which extend through the recesses (211) on the end faces (210) lying opposite each other, while the longitudinal sides (213) have strips which extend beneath the centrifugal disc (201, 221, 224, 231, 250).

8. Centrifugal fertilizer broadcaster according to claim 7, characterised in that holding elements (215), which are pivotable with the throwing vane (203, 222, 225, 232, 251), are disposed beneath the scale (208, 229, 239, 247, 258, 256) and the centrifugal disc (201, 221, 224, 231, 250).

9. Centrifugal fertilizer broadcaster according to claim 1, characterised in that throwing vanes (203, 222, 225, 232, 251) of different lengths are disposed on each centrifugal disc (201, 221, 224, 231, 250), and/or the outer edges of the throwing vanes (203, 222, 225, 232, 251) have different spacings from the rotary axis of the centrifugal disc, and/or the throwing vanes are set at different angles.

**Revendications**

1. Epandeur centrifuge pour distribuer des engrais ou produits analogues, comportant un réservoir d'alimentation, des éléments de dosage pour au moins deux disques d'épandage disposés transversalement à la direction de déplacement, et chaque disque d'épandage (201, 221, 224, 231, 250) comportant au moins deux pales d'éjection (203, 222, 225, 232, 251), la distance du bord extérieur de la pale d'éjection et de l'axe de rotation du disque d'épandage ainsi que l'angle de réglage horizontal entre la paie d'éjection et la tangente appliquée au point de son arête d'éjection sur sa trajectoire circulaire, dans le sens de rotation étant réglables et pour chaque pale d'éjection (203, 222, 225, 232, 251), pour régler l'angle d'éjection horizontal, on a des éléments de marquage (209, 223, 230, 24, 257) prévus sur le disque d'épandage (201, 221, 224, 231, 250), épandeur caractérisé en ce que les éléments de marquage (209, 223, 230, 240, 257) sont réalisés ou repérés différemment et cela de façon que les points de marquage (209, 223, 230, 240, 257) soient associés sans équivoque et sans risque d'inversion à chaque paie d'éjection (203, 222, 225, 232, 251).

2. Epandeur centrifuge d'engrais selon la revendication 1, caractérisé en ce que les éléments de marquage (209, 223, 230, 240, 257) associés à chaque pale d'éjection (203, 222, 225, 232, 251) utilisent d'autres signaux-symboles pour régler les pales d'éjection (203, 222, 225, 232, 251).

3. Epandeur centrifuge selon la revendication 1 dans lequel chaque pale d'éjection se compose d'au moins deux parties susceptibles de coulisser l'une par rapport à l'autre télescopiquement dans la direction longitudinale de la pale d'éjection et qui peuvent être bloquées pour différentes longueurs de la pale d'éjection, la partie intérieure de la pale d'éjection étant bloquée dans la direction radiale tout en pouvant pivoter angulairement sur le disque d'épandage alors que la partie adjacente à la partie intérieure de la paie d'éjection peut coulisser dans la direction longitudinale de la pale par rapport à la partie pivotante de cette pale et à la partie intérieure pivotante et à la partie coulissante sont associés des repères, épandeur caractérisé en ce que pour régler la longueur des pales d'éjection télescopiques (232, 251), on a d'autres éléments de repère (248, 258) et/ou dénominations et symboles que pour le réglage angulaire.

4. Epandeur centrifuge selon l'une ou plusieurs des revendications précédentes, caractérisé en ce que les échelles (208, 229, 239, 247, 258, 256) associées aux pales d'éjection (203, 222, 225, 232, 251) portent des références différentes (209, 223, 230, 240, 248, 259).

5.  Epandeur centrifuge selon l'une ou plusieurs des revendications précédentes, caractérisé en ce que les échelles (208, 229, 239, 247, 258, 256) qui sont associées aux pales d'éjection (203, 222, 225, 232, 251) pour leur réglage, sont de types différents (tels que la forme et les dimensions, un repère avec une flèche)

6.  Epandeur centrifuge selon l'une ou plusieurs des revendications précédentes, caractérisé en ce que les échelles (208, 229, 239, 247, 258, 256) sont placés dans des cavités (207, 211) dans les disques d'épandage (201, 221, 224, 231, 250) et les échelles sont réalisées en matière synthétique.

7.  Epandeur centrifuge salon la revendication 6, caractérisé en ce que l'échelle (208, 229, 239, 247, 258, 256) comporte des moyens de fixation (212) venant prendre dans les faces frontales en regard (210) dans des cavités (211) alors que les grands côtés (213) présentent des bandes venant sous le disque d'épandage (201, 221, 224, 231, 250).

8.  Epandeur centrifuge selon la revendication 7, caractérisé en ce qu'en-dessous de l'échelle (208, 229, 239, 247, 258, 256) et du disque d'épandage (201, 221, 224, 231, 250), sont disposés à des éléments de fixation (215) qui pivotent avec les pales d'éjection (203, 222, 225, 232, 251).

9.  Epandeur centrifuge selon la revendication 1, caractérisé en ce que des pales d'éjection (203, 222, 225, 232, 251) de longueur différente sont prévues sur chaque disque d'épandage (201, 221, 224, 231, 250) et/ou les bords extérieurs des pales d'éjection (203, 222, 225, 232, 251) sont à des distances différentes de l'axe de rotation du disque d'épandage et/ou les pales d'éjection sont réglées sur des angles différents.

FIG. 1

*FIG. 2*

*FIG. 3*

*FIG. 4*

FIG. 5

202

221

222

208

208

222

FIG. 6

208

216

A B C D E F G H I J

223

FIG. 7

208

216

K L M N O P Q R S T

223

FIG. 8

FIG. 9

FIG. 10

EP 0 312 679 B1

FIG. 11

15

FIG. 12

FIG. 13

FIG. 14

FIG. 15

FIG. 16

256

257

XX1

XX1

FIG. 17

256

257

FIG. 18

258    259

A B C D E F G H I

FIG. 19

252

258    259

A B C D E F G H I

FIG. 20

252

256

FIG. 21